# EUROPEAN PATENT APPLICATION

(11) **EP 4 440 191 A1**
(43) Date of publication of application: **02.10.2024**
(21) Application number: 22906681.6
(22) Date of filing: 16.12.2022
(51) Int. Cl.: H04W 36/00

(54) **CELL HANDOVER METHOD AND COMMUNICATION DEVICE**

(30) Priority: 17.12.2021 CN 202111549955
(71) Applicant: Huawei Technologies Co., Ltd., Shenzhen, Guangdong 518129 (CN)
(72) Inventor: ZHU, Yonghe, Shenzhen, Guangdong 518129 (CN); GENG, Tingting, Shenzhen, Guangdong 518129 (CN); ZENG, Yu, Shenzhen, Guangdong 518129 (CN); ZENG, Qinghai, Shenzhen, Guangdong 518129 (CN)
(74) Representative: Körber, Martin Hans
(86) International application number: PCT/CN2022/139485
(87) International publication number: WO 2023/109936

(57) **Abstract**

Embodiments of this application provide a cell handover method and a communication apparatus. The method is used to hand over a terminal from a second network element to a first network element. The first network element receives a first random access request message from the terminal, where the first random access request message includes information indicating the second network element, and a first cell group managed by the first network element and a second cell group managed by the second network element belong to a dynamic cell set DCS. The first network element sends, to a core network element, a first connection request message including first DCS indication information, and the first DCS indication information indicates the core network element to deactivate a connection to a network element to which a cell group that is in the DCS and that was accessed by the terminal belongs. The first network element receives a first connection acknowledgment message from the core network element. This can resolve a problem that when a serving cell changes, the core network element frequently disconnects/establishes a connection to a network element to which each cell group in the DCS belongs.

## Description

This application claims priority to Chinese Patent Application No. 202111549955.9, filed with the China National Intellectual Property Administration on December 17, 2021 and entitled "CELL HANDOVER METHOD AND COMMUNICATION APPARATUS", which is incorporated herein by reference in its entirety.

### TECHNICAL FIELD

Embodiments of this application relate to the communication field, and more specifically, to a cell handover method and a communication apparatus.

### BACKGROUND

A handover procedure may be triggered in the following two manners: L1/L2 measurement-based handover triggering and L3 measurement-based handover triggering. L1/L2 measurement is faster than L3 measurement. Therefore, the L1/L2 measurement-based handover triggering manner is mainly applied to a current handover procedure. However, the L1/L2 measurement-based handover triggering manner has a problem of poor stability. When UE is at a cell edge, a handover procedure may be frequently triggered due to inaccurate and/or unstable measurement, and a core network element may frequently disconnect or establish a connection to a base station.

### SUMMARY

This application provides a cell handover method and a communication apparatus, to avoid a problem that a core network element frequently disconnects or establishes a connection to a base station when a handover procedure is frequently triggered due to inaccurate and/or unstable L1/L2 measurement.

According to a first aspect, a cell handover method is provided. The method is used to hand over a terminal from a second network element to a first network element, and includes: The first network element receives a first random access request message from the terminal, where the first random access request message includes information indicating the second network element, and a first cell group managed by the first network element and a second cell group managed by the second network element belong to a dynamic cell set DCS. The first network element sends a first connection request message to a core network element, where the first connection request message includes first DCS indication information, and the first DCS indication information indicates the core network element to deactivate a connection to a network element to which a cell group that is in the DCS and that was accessed by the terminal belongs. The first network element receives a first connection acknowledgment message from the core network element.

In the foregoing technical solution, the first DCS indication information indicates the core network element to deactivate the connection to the network element to which the cell group that is in the DCS and that was accessed by the terminal belongs, so that the core network element can maintain a connection to a network element to which each cell group in the DCS belongs. This can resolve a problem that when a serving cell changes, the core network element frequently disconnects/establishes the connection to the network element to which each cell group in the DCS belongs.

With reference to the first aspect, in some implementations of the first aspect, if the first network element establishes no connection to the core network element, the first connection request message is used to request to establish a connection to the core network element, the first connection acknowledgment message indicates that the first network element has established the connection to the core network element, and the first connection acknowledgment message includes a next hop chaining counter NCC parameter and a next hop NH parameter that are used for handing over the terminal to the second network element.

In the foregoing technical solution, the first network element establishes the connection to the core network element, and the core network element may establish, for the terminal, context information for handover between the first network element and the second network element. In addition, the core network element sends, to the first network element, the next hop chaining counter NCC parameter and the next hop NH parameter that are used for handing over the terminal to the second network element. In other words, the core network element maintains that base stations to which cells in the DCS belong use a same key, to ensure that encryption and integrity verification keys of the terminal and the target base station are the same when the terminal is handed over between cell groups in the DCS.

With reference to the first aspect, in some implementations of the first aspect, if the first network element establishes a connection to the core network element and the connection is not activated, the first connection request message is used to request to activate the connection to the core network element, and the first connection acknowledgment message indicates that the connection between the first network element and the core network element is activated.

In the foregoing technical solution, the core network element activates the connection to the first network element, and the first network element may perform data transmission and signaling transmission with the core network element through the connection.

With reference to the first aspect, in some implementations of the first aspect, the first network element receives, from a third network element, a first indication message indicating to release context information of the terminal, where the third network element is a network element that the terminal accesses after being handed over from the first network element, and a third cell group managed by the third network element does not belong to the DCS; and the first network element releases the context information of the terminal based on the first indication message.

When the terminal is handed over to a cell group that does not belong to the DCS, a network element to which the cell group outside the DCS belongs may notify a network element to which a last serving cell of the terminal in the DCS belongs to release the context information of the terminal, to reduce radio resource occupation and memory occupation of the base station.

With reference to the first aspect, in some implementations of the first aspect, the method further includes: The first network element sends, to a network element to which a cell group other than the first cell group in the DCS belongs, a second indication message indicating to release the context information of the terminal.

When the terminal is handed over to the cell group that does not belong to the DCS, the first network element may separately notify a network element to which another cell group in the DCS belongs to release the context information of the terminal, to reduce radio resource occupation and memory occupation of the base station.

With reference to the first aspect, in some implementations of the first aspect, the first network element sends, to a fourth network element, a second indication message indicating to release the context information of the terminal, where a fourth cell group managed by the fourth network element belongs to the DCS, and the second indication message further indicates the fourth network element to send, to a network element to which a cell group other than the first cell group and the fourth cell group in the DCS belongs, a third indication message indicating to release the context information of the terminal.

When the terminal is handed over to the cell group that does not belong to the DCS, the first network element may notify a network element to which any cell group in the DCS belongs to release the context information of the terminal, and indicate the network element to separately notify a network element to which another cell group belongs to release the context information of the terminal, to reduce radio resource occupation and memory occupation of the base station.

According to a second aspect, a cell handover method is provided, including: The core network element receives a first connection request message from a first network element, where the first connection request message includes first DCS indication information, and the first DCS indication information indicates the core network element to deactivate a connection to a network element to which a cell group that is in a DCS and that was accessed by a terminal belongs. The core network element deactivates, based on the first DCS indication information, the connection to the network element to which the cell group that is in the DCS and that was accessed by the terminal belongs. The core network element sends a first connection acknowledgment message to the first network element.

With reference to the second aspect, in some implementations of the second aspect, if the first network element establishes no connection to the core network element, the first connection request message is used to request to establish a connection to the core network element, and the method further includes: The core network element establishes the connection to the first network element, where the first connection acknowledgment message indicates that the first network element has established the connection to the core network element, the first connection acknowledgment message includes a next hop chaining counter NCC parameter and a next hop NH parameter that are used for handing over the terminal to a second network element, and the second network element is a source access network element for handing over the terminal to the first network element.

With reference to the second aspect, in some implementations of the second aspect, if the first network element establishes a connection to the core network element and the connection is not activated, the first connection request message is used to request to activate the connection to the core network element, and the method further includes: The core network element activates the connection to the first network element, where the first connection acknowledgment message indicates that the connection between the first network element and the core network element is activated.

For specific details and beneficial effects of the implementations provided in the second aspect, refer to the foregoing descriptions of the implementations of the first aspect. Details are not described in the second aspect.

According to a third aspect, a cell handover method is provided, including: A terminal receives DCS configuration information from a fifth network element, where the DCS configuration information is used by the terminal to determine a target cell, and a fifth cell group managed by the fifth network element belongs to a dynamic cell set DCS. The terminal measures signal quality of at least one first cell. The terminal determines the target cell based on the signal quality of the at least one first cell and the DCS configuration information. The terminal sends a first random access request message to a network element to which the target cell belongs.

In the foregoing technical solution, the terminal may determine the target cell based on the DCS configuration information and the signal quality of the at least one first cell, and initiate random access, to avoid a handover failure caused by a case in which when a radio environment between the terminal and a source base station deteriorates, the source base station cannot determine the target cell because a measurement report of the terminal cannot reach the source base station, or a handover command delivered, to the terminal, by the source base station after receiving the measurement report cannot reach the terminal, so as to improve a handover success rate and improve communication quality.

With reference to the third aspect, in some implementations of the third aspect, the DCS configuration information includes a first threshold, and the terminal determines the target cell based on the signal quality of the at least one first cell and the DCS configuration information includes: If signal quality of one of the at least one first cell exceeds the first threshold, the terminal determines the first cell as the target cell; or if signal quality of a plurality of first cells of the at least one first cell exceeds the first threshold, the terminal determines a first cell with best signal quality in the plurality of first cells as the target cell.

In the foregoing technical solution, the terminal uses a cell whose signal quality exceeds the first threshold and signal quality is the best as the target cell, so that the handover success rate and communication quality after the terminal is handed over to the target cell can be improved.

With reference to the third aspect, in some implementations of the third aspect, the DCS includes K cell groups managed by K network elements, the DCS configuration information further includes a cell-radio network temporary identifier C-RNTI configured for the terminal by a network element other than the fifth network element in the K network elements, K is an integer greater than 1, and the C-RNTI is used by the terminal to access, when the target cell belongs to the DCS, the network element to which the target cell belongs; and the DCS configuration information further includes second DCS indication information, and the second DCS indication information indicates the terminal to determine the target cell.

In the foregoing technical solution, a network element to which each cell group in the DCS belongs configures a C-RNTI for the terminal in advance, and the terminal may directly use the configured C-RNTI in a subsequent handover procedure, to avoid that the network element to which each cell group in the DCS belongs frequently reconfigures the C-RNTI for the terminal, so as to reduce signaling overheads and improve a handover rate.

According to a fourth aspect, a cell handover method is provided, including: A fifth network element determines DCS configuration information. The fifth network element sends the DCS configuration information to a terminal, where the DCS configuration information is used by the terminal to determine a target cell, and a fifth cell group managed by the fifth network element belongs to a dynamic cell set DCS.

With reference to the fourth aspect, in some implementations of the fourth aspect, the DCS configuration information includes a first threshold.

With reference to the fourth aspect, in some implementations of the fourth aspect, the DCS includes K cell groups managed by K network elements, the DCS configuration information further includes a C-RNTI configured for the terminal by a network element other than the fifth network element in the K network elements, K is an integer greater than 1, and the C-RNTI is used by the terminal to access, when the target cell belongs to the DCS, a network element to which the target cell belongs; and the DCS configuration information further includes second DCS indication information, and the second DCS indication information indicates the terminal to determine the target cell.

For specific details and beneficial effects of the implementations provided in the fourth aspect, refer to the foregoing descriptions of the implementations of the third aspect. Details are not described in the fourth aspect.

According to a fifth aspect, a communication apparatus is provided, including: a receiving unit, configured to receive a first random access request message from a terminal, where the first random access request message includes information indicating a second network element, and a first cell group managed by the communication apparatus and a second cell group managed by the second network element belong to a dynamic cell set DCS; and a sending unit, configured to send a first connection request message to a core network element, where the first connection request message includes first DCS indication information, and the first DCS indication information indicates the core network element to deactivate a connection to a network element to which a cell group that is in the DCS and that was accessed by the terminal belongs. The receiving unit is further configured to receive a first connection acknowledgment message from the core network element.

With reference to the fifth aspect, in some implementations of the fifth aspect, if the communication apparatus establishes no connection to the core network element, the first connection request message is used to request to establish a connection to the core network element, the first connection acknowledgment message indicates that the communication apparatus has established the connection to the core network element, and the first connection acknowledgment message includes a next hop chaining counter NCC parameter and a next hop NH parameter that are used for handing over the terminal to the second network element.

With reference to the fifth aspect, in some implementations of the fifth aspect, if the communication apparatus has established a connection to the core network element and the connection is not activated, the first connection request message is used to request to activate the connection to the core network element, and the first connection acknowledgment message indicates that the connection between the communication apparatus and the core network element is activated.

With reference to the fifth aspect, in some implementations of the fifth aspect, the receiving unit is further configured to receive, from a third network element, a first indication message indicating to release context information of the terminal, where the third network element is a network element that the terminal accesses after being handed over from the communication apparatus, and a third cell group managed by the third network element does not belong to the DCS; and the communication apparatus further includes a processing unit, configured to release the context information of the terminal based on the first indication message.

With reference to the fifth aspect, in some implementations of the fifth aspect, the sending unit is further configured to send, to a network element to which a cell group other than the first cell group in the DCS belongs, a second indication message indicating to release the context information of the terminal.

With reference to the fifth aspect, in some implementations of the fifth aspect, the sending unit is further configured to send, to a fourth network element, a second indication message indicating to release the context information of the terminal, where a fourth cell group managed by the fourth network element belongs to the DCS, and the second indication message further indicates the fourth network element to send, to a network element to which a cell group other than the first cell group and the fourth cell group in the DCS belongs, a third indication message indicating to release the context information of the terminal.

According to a sixth aspect, a communication apparatus is provided, including: a receiving unit, configured to receive a first connection request message from a first network element, where the first connection request message includes first DCS indication information, and the first DCS indication information indicates the communication apparatus to deactivate a connection to a network element to which a cell group that is in a DCS and that was accessed by a terminal belongs; a processing unit, configured to deactivate, based on the first DCS indication information, the connection to the network element to which the cell group that is in the DCS and that was accessed by the terminal belongs; and a sending unit, configured to send a first connection acknowledgment message to the first network element.

With reference to the sixth aspect, in some implementations of the sixth aspect, if the first network element establishes no connection to the communication apparatus, the first connection request message is used to request to establish a connection to the communication apparatus. The processing unit is further configured to establish the connection to the first network element, where the first connection acknowledgment message indicates that the first network element has established the connection to the communication apparatus, the first connection acknowledgment message includes a next hop chaining counter NCC parameter and a next hop NH parameter that are used for handing over the terminal to a second network element, and the second network element is a source access network element for handing over the terminal to the first network element.

With reference to the sixth aspect, in some implementations of the sixth aspect, if the first network element has established a connection to the communication apparatus and the connection is not activated, the first connection request message is used to request to activate the connection to the communication apparatus, the processing unit is further configured to activate the connection to the first network element, and the first connection acknowledgment message indicates that the connection between the first network element and the communication apparatus is activated.

According to a seventh aspect, a communication apparatus is provided, including: a receiving unit, configured to receive DCS configuration information from a fifth network element, where the DCS configuration information is used by the terminal to determine a target cell, and a fifth cell group managed by the fifth network element belongs to a dynamic cell set DCS; a processing unit, configured to measure signal quality of at least one first cell, where the processing unit is further configured to determine the target cell based on the signal quality of the at least one first cell and the DCS configuration information; and a sending unit, configured to send a first random access request message to a network element to which the target cell belongs.

With reference to the seventh aspect, in some implementations of the seventh aspect, the processing unit is specifically configured to: If signal quality of one of the at least one first cell exceeds the first threshold, the processing unit determines the first cell as the target cell; or if signal quality of a plurality of first cells of the at least one first cell exceeds the first threshold, the processing unit determines a first cell with best signal quality in the plurality of first cells as the target cell.

With reference to the seventh aspect, in some implementations of the seventh aspect, the DCS includes K cell groups managed by K network elements, the DCS configuration information further includes a cell-radio network temporary identifier C-RNTI configured for the communication apparatus by a network element other than the fifth network element in the K network elements, K is an integer greater than 1, and the C-RNTI is used by the communication apparatus to access, when the target cell belongs to the DCS, the network element to which the target cell belongs; and the DCS configuration information further includes second DCS indication information, and the second DCS indication information indicates the communication apparatus to determine the target cell.

According to an eighth aspect, a communication apparatus is provided, including: a processing unit, configured to determine DCS configuration information; and a sending unit, configured to send the DCS configuration information to a terminal, where the DCS configuration information is used by the terminal to determine a target cell, and a fifth cell group managed by the communication apparatus belongs to a dynamic cell set DCS.

With reference to the eighth aspect, in some implementations of the eighth aspect, the DCS configuration information includes a first threshold.

With reference to the eighth aspect, in some implementations of the eighth aspect, the DCS includes K cell groups managed by K network elements, the DCS configuration information further includes a C-RNTI configured for the terminal by a network element other than the communication apparatus in the K network elements, K is an integer greater than 1, and the C-RNTI is used by the terminal to access, when the target cell belongs to the DCS, a network element to which the target cell belongs; and the DCS configuration information further includes second DCS indication information, and the second DCS indication information indicates the terminal to determine the target cell.

According to a ninth aspect, a communication apparatus is provided, including a processor. The processor is coupled to a memory, the memory is configured to store a program or instructions, and when the program or the instructions is/are executed by the processor, the communication apparatus is enabled to implement any possible implementation of the first aspect to the fourth aspect.

According to a tenth aspect, a computer storage medium is provided, including computer instructions. When the computer instructions are run on an electronic device, the electronic device is enabled to implement any possible implementation of the first aspect to the fourth aspect.

According to an eleventh aspect, a computer program product is provided. When the computer program product runs on an electronic device, the electronic device is enabled to implement any possible implementation of the first aspect to the fourth aspect.

### BRIEF DESCRIPTION OF DRAWINGS

FIG. 1 is a diagram of an application scenario according to this application;
FIG. 2 is a diagram of a cell handover method according to an embodiment of this application;
FIG. 3 is a diagram of another cell handover method according to an embodiment of this application;
FIG. 4A and FIG. 4B are a diagram of another cell handover method according to an embodiment of this application;
FIG. 5 is a diagram of another cell handover method according to an embodiment of this application;
FIG. 6 is a diagram of another cell handover method according to an embodiment of this application;
FIG. 7 is a block diagram of a communication apparatus according to an embodiment of this application; and
FIG. 8 is a diagram of a structure of a communication apparatus according to an embodiment of this application.

### DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or advantageous than another embodiment or design scheme. Exactly, the term "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A terminal device in embodiments of this application may also be referred to as user equipment (user equipment, UE), a mobile terminal (mobile terminal, MT), an access terminal, a subscriber unit, a subscriber station, a mobile site, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a tablet computer (pad), a mobile Internet device (mobile Internet device, MID), a wearable device, a computer having a receiving/sending function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. A terminal device with a wireless receiving/sending function and a chip that can be disposed in the terminal device are collectively referred to as the terminal device in this application.

It should be understood that the technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, or a new radio (new radio, NR) system.

An access network device in embodiments of this application may be a device configured to communicate with a terminal device. The access network device in embodiments of this application is also referred to as a base station, and may be a base transceiver station (base transceiver station, BTS) or a base station controller (base station controller, BSC) in the GSM system or the CDMA system, or may be a base station (NodeB, NB) or a radio network controller (radio network controller, RNC) in the WCDMA system, or may be an evolved NodeB (evolved NodeB, eNB, or eNodeB) in the LTE system, may be a home base station (for example, a home evolved NodeB, or a home NodeB, or an HNB), or may be a radio controller in a cloud radio access network (cloud radio access network, CRAN) scenario; or the radio access network device may be a relay station, an access point, a vehicle-mounted device, a wearable device, a radio access network device (for example, a gNB) in a 5G network, or a future evolved radio access network device, or one or a group of antenna panels (including a plurality of antenna panels) of a base station in a 5G system, or may be a network node that forms a gNB or a transmission point, for example, a baseband unit (baseband unit, BBU) or a distributed unit (distributed unit, DU). This is not limited in embodiments of this application.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the radio access network device may be a device including one or more of a CU node, a DU node, and an AAU node. In addition, the CU may be classified as a radio access network device in an access network (radio access network, RAN), or the CU may be classified as a radio access network device in a core network (core network, CN). This is not limited in this application.

A core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like. The AMF entity may be responsible for access management and mobility management of a terminal. The SMF entity may be responsible for session management, for example, user session establishment. The UPF entity may be a functional entity on a user plane, and is mainly responsible for connecting to an external network. It should be noted that an entity in embodiments of this application may also be referred to as a network element or a functional entity. For example, the AMF entity may also be referred to as an AMF network element or an AMF functional entity. For another example, the SMF entity may also be referred to as an SMF network element or an SMF functional entity.

In embodiments of this application, the terminal device or the radio access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be the terminal device, the radio access network device, or a functional module that is in the terminal device or the radio access network device and that can invoke and execute the program.

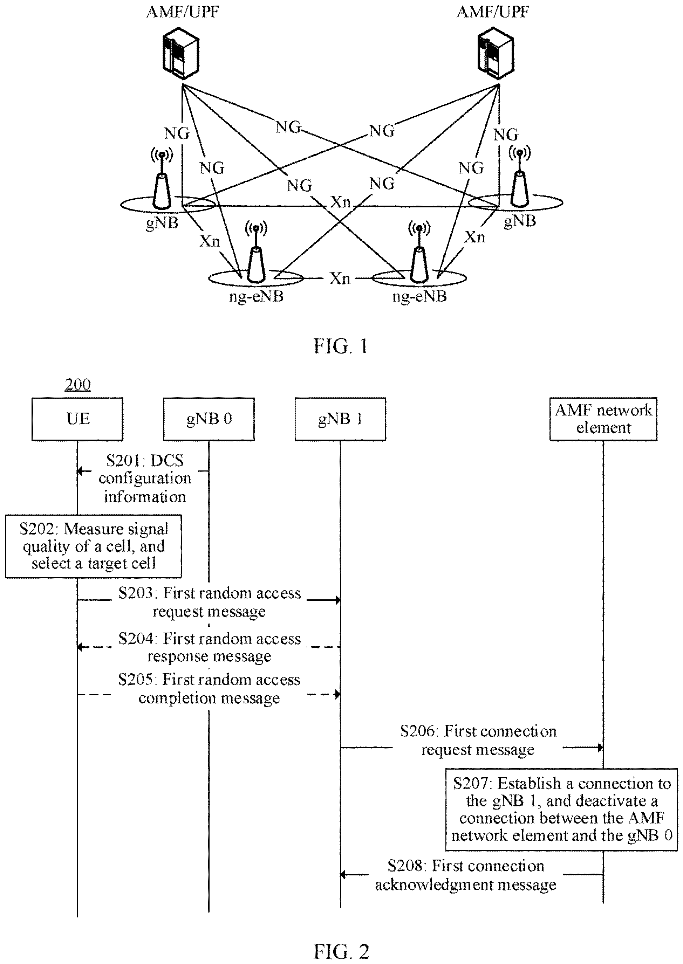

FIG. 1 is a diagram of an application scenario according to an embodiment of this application. As shown in FIG. 1, gNBs are connected through an Xn interface. AgNB is connected to a 5G core network through an NG interface.

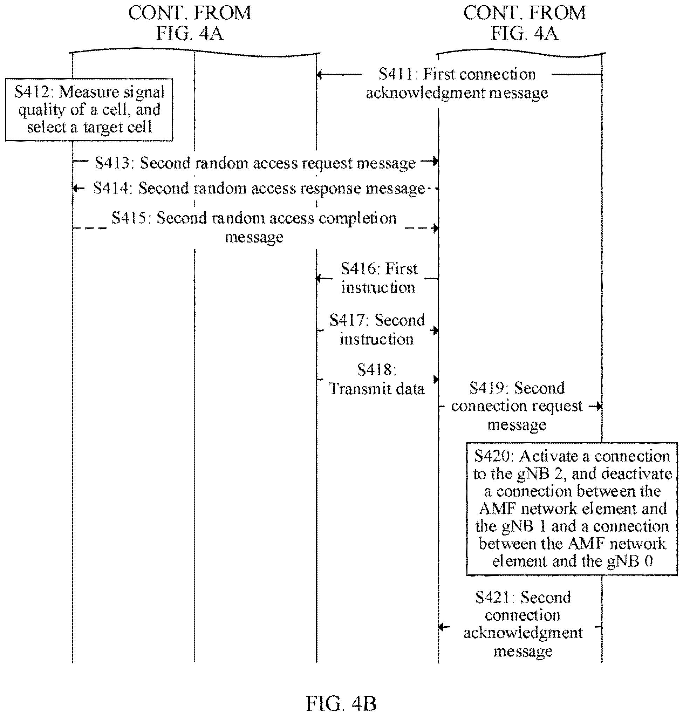

FIG. 2 to FIG. 4A and FIG. 4B are schematic flowcharts of methods for handing over a terminal between cells included in a dynamic cell set (dynamic cell set, DCS) according to embodiments of this application. It should be understood that these steps or operations are merely examples. In embodiments of this application, other operations or variations of the operations in FIG. 2 to FIG. 4A and FIG. 4B may be further performed. In addition, the steps in FIG. 2 to FIG. 4A and FIG. 4B may be performed in a sequence different from that presented in FIG. 2 to FIG. 4A and FIG. 4B, and it is possible that not all the operations in FIG. 2 to FIG. 4A and FIG. 4B need to be performed. The dynamic cell set in embodiments of this application is a set of at least two cells or cell groups. Embodiments of this application are described by using cells as an example. The cells in the DCS are respectively managed by base stations to which the cells belong. For example, a gNB 0 manages a cell 0, a gNB 1 manages a cell 1, a gNB 2 manages a cell 2, a gNB 3 manages a cell 3, and a gNB 4 manages a cell 4. The following can be deduced from this. The base stations to which all the cells in the DCS belong configure a cell-radio network temporary identifier (cell-radio network temporary identifier, C-RNTI) for the terminal separately. When the terminal is handed over between any two cells in the DCS, the base stations to which all the cells in the DCS belong retain context information of the terminal. In the DCS, only one cell is activated each time, that is, terminal-related signaling and/or data are/is sent only to a base station to which the activated cell belongs, and the activated cell is referred to as a serving cell of UE. The terminal accesses only the base station to which the activated cell belongs, and the base station is referred to as a serving base station of the UE. The cells in the DCS are not classified into a primary cell and a secondary cell. FIG. 2 to FIG. 4A and FIG. 4B are described by using an example in which the DCS configured by the gNB 0 for the terminal includes the cell 0, the cell 1, and the cell 2. Signal quality of all the cells in the DCS meets a quality threshold set by the gNB 0.

A method 200 shown in FIG. 2 is described by using an example in which a first network element is the gNB 1, a second network element is the gNB 0, and a core network element is an AMF network element. It should be understood that the example in which the first network element is the gNB 1, the second network element is the gNB 0, and the core network element is the AMF network element is merely used to help a person skilled in the art better understand the solutions of this application, and should not be construed as a limitation on this application. In the method 200, a current serving cell of UE is the cell 0. Correspondingly, a current serving base station of the UE is the gNB 0 to which the cell 0 belongs, and the AMF network element does not establish a connection in advance to a base station (the gNB 1 and the gNB 2) to which a cell (the cell 1 and the cell 2) other than the current serving cell (the cell 0) in the DCS belongs.

S201: The gNB 0 sends DCS configuration information to the UE.

The DCS configuration information includes the following information.
(1) Second DCS indication information: The second DCS indication information may indicate that a type of configuration information is a DCS type. After a terminal determines that the configuration information is of the DCS type, the gNB 0 does not need to select a target base station for handover for the terminal, and the terminal may determine, based on the configuration information, a target cell for handover, and initiate access to a base station to which the target cell belongs.
(2) C-RNTI configured by a base station to which a cell in the DCS belongs for the UE: The C-RNTI may be cell-level or cell-pair-level. For example, the DCS includes the cell 0, the cell 1, and the cell 2, and a target cell is the cell 1. A cell-pair-level C-RNTI may include a C-RNTI 1-0 used by the UE to access the cell 1 from the cell 0, and a C-RNTI 1-2 used by the UE to access the cell 1 from the cell 2. Different C-RNTIs are configured for the UE, so that the cell 1 may determine, based on a C-RNTI used by the UE to access the cell 1, whether a previous serving cell of the UE is the cell 0 (C-RNTI 1-0) or the cell 2 (C-RNTI 1-2).
(3) Target cell selection criterion: When signal quality of a cell meets the selection criterion, the UE determines the cell as a target cell, and accesses a base station to which the target cell belongs. When a plurality of cells meet the selection criterion, the UE determines a cell with best signal quality as a target cell, and accesses a base station to which the target cell belongs. For example, the selection criterion may include a signal quality threshold. Optionally, the selection criterion further includes a measurement type. For example, the selection criterion may indicate whether selection criterion determining is performed based on an L1/L2 measurement result or an L3 measurement result.

Optionally, the DCS configuration information further includes random access channel (random access channel, RACH) information, and the RACH information includes at least one of the following information: a preamble (preamble) indication, a synchronization signal/physical broadcast channel block (synchronization signal/physical broadcast channel block, SSB), a set of dedicated RACH resources, association information between RACH resources and an SSB, association information between RACH resources and a UE-specific channel state information-reference signal (channel state information-reference signal, CSI-RS) configuration, and common RACH resources. Optionally, the RACH information may be cell-level or cell-pair-level. For example, the DCS includes the cell 0, the cell 1, and the cell 2, and the target cell is the cell 1. Cell-pair-level RACH information may include RACH information used by the UE to access the cell 1 from the cell 0, and RACH information used by the UE to access the cell 1 from the cell 2. Different RACH information is configured for the UE, so that the cell 1 may determine, based on RACH information used by the UE to access the cell 1, whether a previous serving cell of the UE is the cell 0 or the cell 2.

S202: The UE measures signal quality of a cell.

For example, the UE periodically measures signal quality of the current serving cell (the cell 0) and neighbor cells (for example, the cell 1, the cell 2, and the cell 3). It should be noted that the UE measures signal quality of the cell in the DCS, and further measures signal quality of a cell outside the DCS.

The signal quality of the cell may be represented by at least one of a received signal code power (received signal code power, RSCP), a reference signal receiving power (reference signal receiving power, RSRP), a reference signal receiving quality (reference signal receiving quality, RSRQ), a signal to noise ratio (signal to noise ratio, SNR), a signal to interference plus noise ratio (signal to interference plus noise ratio, SINR), a reference signal strength indication (reference signal strength indication, RSSI), or another signal quality parameter. The signal quality of the cell may be at least one of cell-level, beam-level, channel state information-reference signal-level, numerology-level, slicing (slicing)-level, or bandwidth part (bandwidth part, BWP)-level signal quality. The beam-level signal quality may be SSB-level. The signal quality of the cell may be obtained by measuring at least one of a downlink synchronization channel, a channel state information-reference signal, a demodulation reference signal (demodulation reference signal, DMRS), a cell-specific reference signal (cell-specific reference signal, CRS) signal, or another downlink signal.

It should be understood that, if signal quality information of the cell belongs to one or more of the beam-level, numerology-level, slicing-level, or bandwidth part-level signal quality, information of the cell may further include at least one of corresponding beam, channel state information-reference signal, parameter, slicing, or bandwidth part identification information.

It should be noted that the UE measures only the signal quality of the cell, and does not send a measurement report to the gNB 0. When a cell meets the selection criterion in the DCS configuration information, the UE determines the cell as the target cell. When a plurality of cells meet the selection criterion in the DCS configuration information, the UE determines a cell with best signal quality in the plurality of cells as the target cell. The terminal uses a cell whose signal quality exceeds a first threshold and is the best as the target cell. This can improve user experience, handover success rate, and communication quality after the terminal is handed over to the target cell. For example, the UE determines the cell 1 as the target cell.

S203: The UE sends a first random access request message to the gNB 1.

In a possible implementation, the gNB 1 configures RACH information and/or a C-RNTI of a cell pair of the cell 0 and the cell 1 for the UE. Optionally, the first random access request message includes information indicating the cell 0. The gNB 1 may determine, based on RACH information and/or a C-RNTI in an access process of the UE, that the previous serving cell of the UE is the cell 0. For example, the RACH information used by the UE to send an access request is the RACH information of a cell pair of the cell 0 and the cell 1, so that the gNB 1 can determine the serving cell accessed by the UE before the UE accesses the cell 1. Optionally, the method 200 further includes S204: The gNB 1 sends a first random access response message to the UE, where the message may be a random access response (Random Access Response) message; and S205: The UE sends a first random access completion message to the gNB 1, where the message may be an RRC reconfiguration complete (RRC Reconfiguration Complete) message and/or a MAC control element message. The UE may indicate, based on the first random access completion message, the C-RNTI of the cell pair of the cell 0 and the cell 1 to the gNB 1, so that the gNB 1 can determine the serving cell accessed by the UE before the UE accesses the cell 1.

In another possible implementation, the gNB 1 configures cell-level RACH information and a cell-level C-RNTI for the UE, or the gNB 1 does not configure a contention free random access (contention free random access, CFRA) resource for the UE. In this case, the UE indicates information about the previous serving cell to the gNB 1 in S205. For example, the RRC reconfiguration complete message includes identification information indicating the previous serving cell, or index information of the previous serving cell in the DCS. This is used by the gNB 1 to determine the previous serving cell of the UE. The identification information of the cell may be at least one of the following information: a cell global identifier (cell global identifier, CGI), a physical cell identifier (physical cell identifier, PCI) and a frequency, a cell identifier (cell identifier, cell ID), or another cell identifier of the cell.

S206: The gNB 1 sends a first connection request message to the AMF network element, where the first connection request message is used to request to establish a connection to the AMF network element, the first connection request message includes first DCS indication information, and the first DCS indication information indicates the AMF network element to deactivate a connection to a base station (that is, the gNB 0) to which a cell that is in the DCS and that was accessed by the UE belongs. In other words, the AMF network element sends, to the gNB 1, UE-related signaling and/or data, and no longer sends the signaling and the data to the gNB 0.

For example, the gNB 1 sends a path switch request (PATH SWITCH REQUEST) message to the AMF network element, to notify the AMF network element that the user has moved to the cell 1 to establish the connection between the AMF network element and the gNB 1. The message may include the first DCS indication information. The first DCS indication information may include at least one of information indicating an access type (DCS or another type) or index information of the cell 1 in the DCS, source cell indication information, and the like. The source cell indication information may include at least one of a source cell identifier, interface identification information (source NG-RAN node UE XnAP ID) of the UE in a source base station, and cell pair information. The AMF network element determines, based on the first DCS indication information, whether the cell 0 managed by the gNB 0 and the cell 1 managed by the gNB 1 belong to a same DCS. If the cell 0 and the cell 1 belong to the same DCS, the connection between the AMF network element and the gNB 1 is established, and simultaneously, the connection between the AMF network element and the gNB 0 is deactivated. In addition, if the first DCS indication information includes the source cell indication information, the AMF network element may determine a source cell and a target cell that correspond to the connection between the AMF element and the gNB 1, to maintain a corresponding connection based on corresponding cell pair information. This is used to activate a connection related to a cell pair during subsequent UE handover.

S207: The AMF network element establishes the connection to the gNB 1, and deactivates the connection between the AMF network element and the gNB 0.

S208: The AMF network element sends a first connection acknowledgment message to the gNB 1.

For example, the AMF network element sends a path switch acknowledgment (PATH SWITCH ACKNOWLEDGE) message to the gNB 1. Optionally, if the AMF network element determines that the cell 0 and the cell 1 respectively managed by the gNB 1 and the gNB 0 belong to the same DCS, in a possible implementation, the AMF network element indicates, in the path switch acknowledgment message, a next hop chaining counter (next hop chaining counter, NCC) parameter and a next hop (next hop, NH) parameter that are the same as those of the gNB 0. The NCC and the NH are used to generate encryption and integrity verification keys. In other words, the AMF network element may maintain that a same key is used by the base stations to which the cells in the DCS belong.

According to the foregoing technical solution, when the UE is handed over between cell groups included in the DCS, the AMF network element may maintain a connection to a base station to which each cell in the DCS belongs, to reduce a problem that a connection is frequently disconnected/established due to serving cell changing. The UE may select the target cell based on a measurement result of cell signal quality and initiate access, to avoid a handover failure caused by a case in which the source base station cannot determine the target cell because a measurement report of the UE cannot reach the source base station, or a handover command delivered by the source base station after receiving the measurement report cannot reach the UE, so as to improve a handover success rate and improve communication quality. A network element to which each cell group in the DCS belongs configures a C-RNTI for the terminal in advance, to avoid a problem of latency and a large amount of signaling overheads caused when the terminal is frequently handed over between cell groups in the DCS.

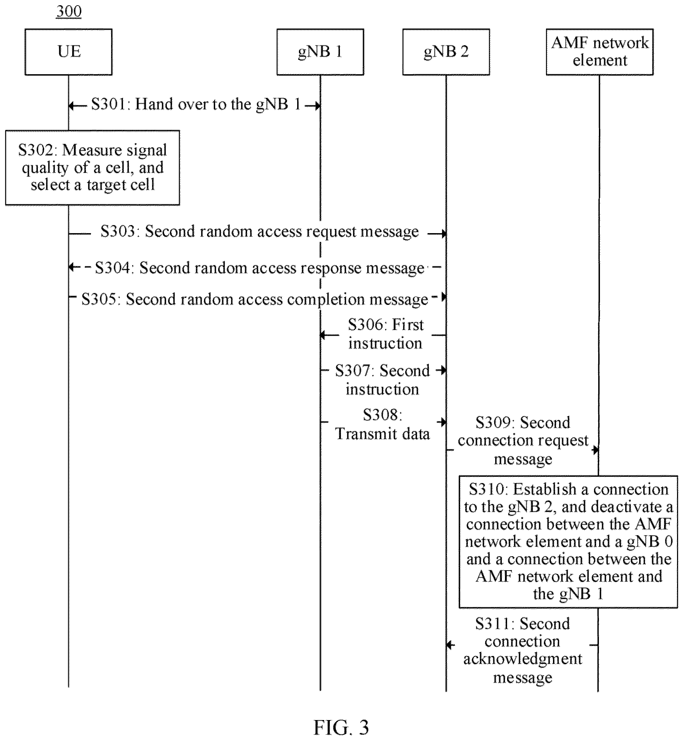

A method 300 shown in FIG. 3 is described by using an example in which a first network element is the gNB 2, a second network element is the gNB 1, and a core network element is an AMF network element. It should be understood that the example in which the first network element is the gNB 2, the second network element is the gNB 1, and the core network element is the AMF network element is merely used to help a person skilled in the art better understand the solutions of this application, and should not be construed as a limitation on this application. In the method 300, UE is handed over from the cell 0 to the cell 1. After measurement, the UE is handed over from the cell 1 to the cell 2 based on cell quality. For this process S302 to S305 and S309 to S311, refer to S202 to S208. Details are not described herein again. A difference lies in that in S310, a connection between the AMF network element and the gNB 2 is established, and a connection between the AMF network element and the gNB 1 and a connection between the AMF network element and the gNB 0 are deactivated. In other words, the connections between the AMF network element and the gNB 0, between the AMF network element and the gNB 1, and between the AMF network element and the gNB 2 are maintained simultaneously.

Optionally, the method 300 further includes S306: The gNB 2 sends a first instruction to the gNB 1, where the first instruction may be a handover success (HANDOVER SUCCESS) message, used to notify the gNB 1 that a user is successfully handed over to the cell 2.

Optionally, the method 300 further includes S307: The gNB 1 sends a second instruction to the gNB 2, where the second instruction may be a serial number status transfer (SN STATUS TRANSFER) message, used to notify the gNB 2 of an uplink PDCP serial number (serial number, SN) receiving status and a downlink PDCP SN sending status of a data radio bearer (data radio bearer, DRB).

Optionally, the method 300 further includes S308: The gNB 1 transmits data to the gNB 2.

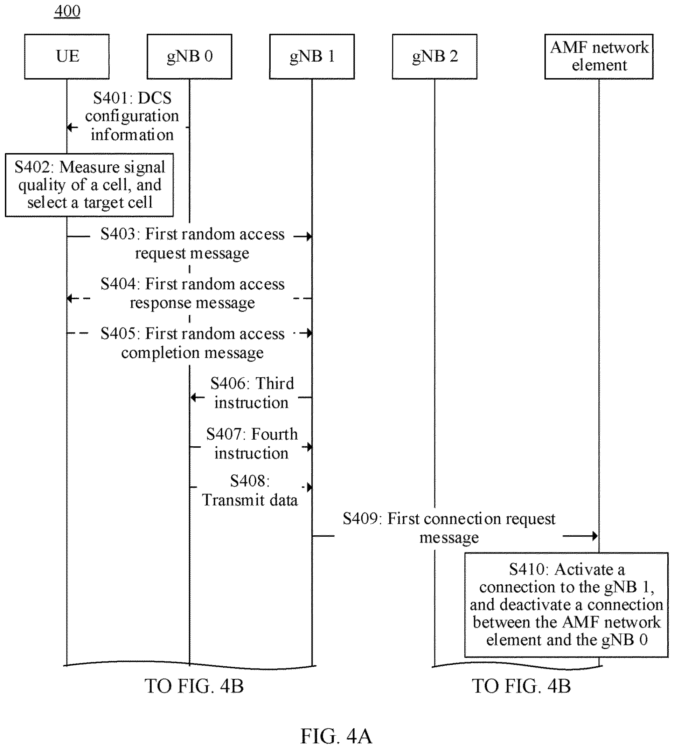

A method 400 shown in FIG. 4A and FIG. 4B is separately described by using an example in which a first network element is the gNB 1, a second network element is the gNB 0, and a core network element is an AMF network element, and an example in which a first network element is the gNB 2, a second network element is the gNB 1, and a core network element is an AMF network element. It should be understood that the example in which the first network element is the gNB 1, the second network element is the gNB 0, and the core network element is the AMF network element, and the example in which the first network element is the gNB 2, the second network element is the gNB 1, and the core network element is the AMF network element are merely used to help a person skilled in the art better understand the solutions of this application, and should not be construed as a limitation on this application. In the method 400, a current serving cell of UE is the cell 0. Correspondingly, a current serving base station of the UE is the gNB 0 to which the cell 0 belongs. The AMF network element has established a connection in advance to a base station (each of the gNB 1 and the gNB 2) to which a cell other than the current serving cell of the UE in the DCS belongs. For a specific connection establishment manner, refer to descriptions of S206 to S208.

Optionally, when the connection to the AMF network element is established in advance, the gNB 1 or the gNB 2 may further send deactivation indication information to the AMF network element, which indicates the AMF network element to separately establish a connection to the gNB 1 and a connection to the gNB 2 and deactivate the connection between the AMF network element and the gNB 1 and the connection between the AMF network element and the gNB 2. For example, in this case, the serving base station of the UE is the gNB 0. Although the AMF network element separately establishes the connection to the gNB 1 and the connection to the gNB 2, the AMF network element still sends UE-related signaling and/or data to the gNB 0, but does not send the signaling and/or data to the gNB 1 and the gNB 2, that is, deactivates the connections between the AMF network element and each of the gNB 1, the gNB 2.

For S401 to S405, refer to S201 to S205. For S406 to S408, refer to S307 to S308. Details are not described herein again. For S409 to S411, refer to S206 to S208. A difference lies in that because the AMF network element has established the connection to the gNB 1, a first connection request message in S409 is used to request the AMF network element to activate the connection to the gNB 1, and a first connection acknowledgment message in S411 indicates that the connection between the gNB 1 and the AMF network element is activated.

For a process S412 to S421 in which the UE is handed over from the cell 1 to the cell 2 based on cell quality, refer to S302 to S311. Details are not described herein again. A difference lies in that in S420, the connection between the AMF network element and the gNB 2 is activated, instead of being established.

In embodiments of this application, a dynamic cell set including three cells (cell 0, cell 1, and cell 2) is taken as an example for description. It should be understood that the dynamic cell set may include more cells. Details are similar to a case in which three cells are included, and are not listed one by one.

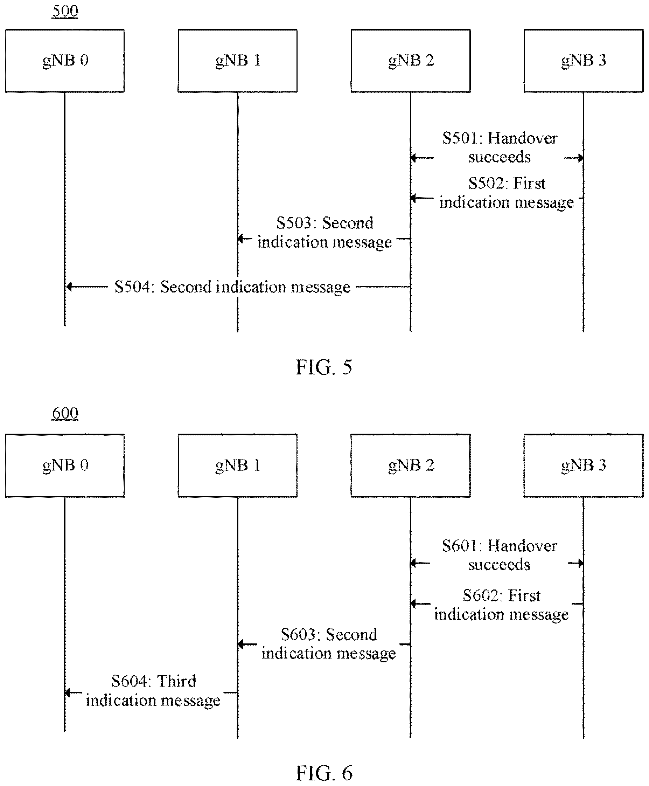

A method 500 and a method 600 are described by using an example in which a first network element is a gNB 2, a third network element is a gNB 3, and a fourth network element is a gNB 1. It should be understood that the example in which the first network element is the gNB 2, the third network element is the gNB 3, and the fourth network element is the gNB 1 is merely used to help a person skilled in the art better understand the solutions of this application, and should not be construed as a limitation on this application. For example, a DCS includes a cell 0, a cell 1, and a cell 2. After UE is handed over between the cells in the DCS for one or more times (as shown in FIG. 2 to FIG. 4A and FIG. 4B), the UE measures that signal quality of a cell 3 is better than signal quality of all the cells in the DCS, and the signal quality of all the cells in the DCS no longer meets a quality threshold set by a gNB 0. In this case, the UE is handed over to the cell 3. An example in which the UE is handed over from the cell 2 to the cell 3 is used for description. FIG. 5 shows a case in which the UE is handed over from the cell 2 to the cell 3.

S501: The UE is handed over from the cell 2 to the cell 3, where the cell 2 and the cell 3 are respectively managed by the gNB 2 and the gNB 3, the cell 2 belongs to the DCS, and the cell 3 does not belong to the DCS, that is, a last serving cell of the UE in the DCS is the cell 2. Correspondingly, a last serving base station of the UE in the DCS is the gNB 2.

The gNB 3 sends a path switch request message to an AMF network element, to trigger a core network to switch a downlink data path to the gNB 3, and establish a connection between the AMF network element and the gNB 3.

S502: The gNB 3 sends, to the gNB 2, a first indication message indicating to delete context information of the UE.

For example, after receiving a path switch request acknowledge message sent by the AMF network element, the gNB 3 sends a terminal context release (UE CONTEXT RELEASE) message to the gNB 2, to notify the gNB 2 to release a control plane resource and a radio resource associated with a context of the UE.

S503: The gNB 2 sends, to the gNB 1, a second indication message indicating to delete the context information of the UE.

The gNB 1 releases the control plane resource and the radio resource associated with a context of the UE.

S504: The gNB 2 sends, to the gNB 0, the second indication message indicating to delete the context information of the UE.

The gNB 0 releases the control plane resource and the radio resource associated with the context of the UE.

It should be understood that a sequence of performing S503 and S504 is not limited in embodiments of this application.

According to the foregoing technical solution, when the UE is handed over to a cell that does not belong to the DCS, a base station to which a last serving cell of the UE in the DCS belongs may separately notify base stations to which other cells in the DCS belong to release the context information of the UE, to reduce radio resource occupation and memory occupation of the base station.

FIG. 6 shows another case in which the UE is handed over from the cell 2 to the cell 3.

S601: The UE is handed over from the cell 2 to the cell 3.

S602: The gNB 3 sends, to the gNB 2, a first indication message indicating to delete context information of the UE.

Details can refer to S502, and are not described herein again.

S603: The gNB 2 sends, to any one (for example, the gNB 1) of base stations to which cells in the DCS belong, a second indication message indicating to delete the context information of the UE.

This is similar to S503, and a difference lies in that the second indication message further indicates the gNB 1 to send, to another base station, a third indication message indicating to delete the context information of the UE.

S604: The gNB 1 sends, to the gNB 0, the third indication message indicating to delete the context information of the UE.

According to the foregoing technical solution, when the UE is handed over to a cell that does not belong to the DCS, a base station to which a last serving cell of the UE in the DCS belongs may notify a base station to which any cell in the DCS belongs to release the context information of the UE, and indicate the base station to separately notify base stations to which other cells in the DCS belong to release the context information of the UE, to reduce radio resource occupation and memory occupation of the base station.

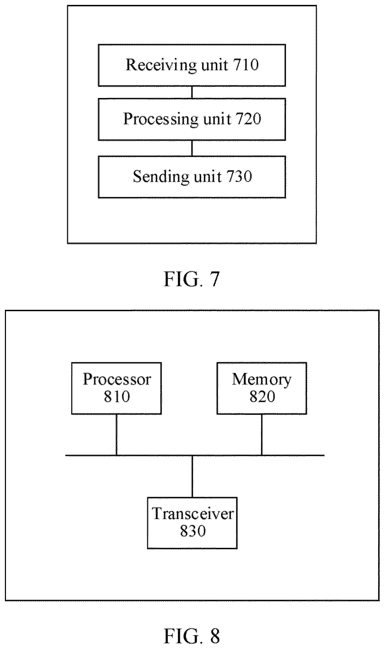

FIG. 7 is a block diagram of a communication apparatus according to this application. The communication apparatus includes a processing unit 720 and a sending unit 730. Optionally, the communication apparatus may be configured to correspondingly implement steps or procedures performed by the base station in the foregoing method embodiments. For example, the communication apparatus may be a base station, or may be a chip or a circuit in the base station. The processing unit 720 is configured to perform a processing-related operation of the base station in the foregoing method embodiments, and the sending unit is configured to perform a sending-related operation of the base station in the foregoing method embodiments. Optionally, the communication apparatus further includes a receiving unit 710, and the receiving unit 710 is configured to perform a receiving-related operation of the base station in the foregoing method embodiments. Optionally, the sending unit 730 and the receiving unit 710 may alternatively be integrated into a transceiver unit that has both a receiving function and a sending function. This is not limited herein.

Optionally, the communication apparatus may be configured to correspondingly implement steps or procedures performed by the AMF network element in the foregoing method embodiments. For example, the communication apparatus may be an AMF network element, or may be a chip or a circuit in the AMF network element. The processing unit 720 is configured to perform a processing-related operation of the AMF network element in the foregoing method embodiments, and the sending unit is configured to perform a sending-related operation of the AMF network element in the foregoing method embodiments. Optionally, the communication apparatus further includes a receiving unit 710, and the receiving unit 710 is configured to perform a receiving-related operation of the AMF network element in the foregoing method embodiments. Optionally, the sending unit 730 and the receiving unit 710 may alternatively be integrated into a transceiver unit that has both a receiving function and a sending function. This is not limited herein.

Optionally, the communication apparatus may be configured to correspondingly implement steps or procedures performed by the terminal in the foregoing method embodiments. For example, the communication apparatus may be a terminal, or may be a chip or a circuit in the terminal. The processing unit 720 is configured to perform a processing-related operation of the terminal in the foregoing method embodiments, and the sending unit is configured to perform a sending-related operation of the terminal in the foregoing method embodiments. Optionally, the communication apparatus further includes a receiving unit 710, and the receiving unit 710 is configured to perform a receiving-related operation of the terminal in the foregoing method embodiments. Optionally, the sending unit 730 and the receiving unit 710 may alternatively be integrated into a transceiver unit that has both a receiving function and a sending function. This is not limited herein.

FIG. 8 is a diagram of a structure of a communication apparatus according to this application. The communication apparatus includes a processor 810. The processor 810 is coupled to a memory 820. The memory 820 is configured to store a computer program or instructions and/or data. The processor 810 is configured to execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are separately disposed.

Optionally, as shown in FIG. 8, the communication apparatus further includes a transceiver 830, and the transceiver 830 is configured to receive and/or send signals. For example, the processor 810 is configured to control the transceiver 830 to receive and/or send signals.

Optionally, the communication apparatus may be configured to implement an operation performed by the base station in the foregoing method embodiments. For example, the processor 810 is configured to execute the computer program or the instructions stored in the memory 820, to implement a related operation performed by the base station in the foregoing method embodiments. For example, the transceiver 830 may be configured to perform a sending operation of the gNB 0 in S201 shown in FIG. 2, and may be further configured to perform a receiving operation of the gNB 0 in S204. The processor 810 is configured to perform a processing operation of the base station in embodiments of this application, for example, determine DCS configuration information. It should be understood that the communication apparatus shown in FIG. 8 may perform an operation performed by any base station like the gNB 1, the gNB 2, or the gNB 3 in FIG. 2 to FIG. 6.

Optionally, the communication apparatus may be configured to implement an operation performed by the terminal in the foregoing method embodiments. For example, the processor 810 is configured to execute the computer program or the instructions stored in the memory 820, to implement a related operation performed by the terminal in the foregoing method embodiments. For example, the processor 810 may be configured to perform S202 shown in FIG. 2. The transceiver 830 may be configured to perform S201 shown in FIG. 2.

Optionally, the communication apparatus may be configured to implement an operation performed by the AMF network element in the foregoing method embodiments. For example, the processor 810 is configured to execute the computer program or the instructions stored in the memory 820, to implement a related operation performed by the AMF network element in the foregoing method embodiments. For example, the transceiver 830 may be configured to perform a receiving operation of the AMF network element in S206 shown in FIG. 2, and may be further configured to perform a sending operation of the AMF network element in S208. The processor 810 is configured to perform a processing step of the AMF network element in embodiments of this application, for example, configured to perform S207 in FIG. 2.

It should be further understood that FIG. 8 is merely an example instead of a limitation, and the communication apparatus including the processor, the memory, and the transceiver may not depend on the structure shown in FIG. 8.

In addition, this application further provides a chip, and the chip includes a processor. A memory configured to store a computer program is disposed independently of the chip. The processor is configured to execute the computer program stored in the memory, so that an operation and/or processing performed by the base station, the terminal, or the AMF network element in any method embodiment and/is performed.

Further, the chip may include a communication interface. The communication interface may be an input/output interface, an interface circuit, or the like. Further, the chip may include the memory.

The chip in embodiments of this application may be a field programmable gate array (field programmable gate array, FPGA), an application-specific integrated chip (application-specific integrated circuit, ASIC), a system chip (system on chip, SoC), a CPU, a network processor (network processor, NP), a digital signal processor (digital signal processor, DSP), a micro controller unit (micro controller unit, MCU), a programmable logic device (programmable logic device, PLD), another programmable logic device, a discrete gate or a transistor logic device, a discrete hardware component, or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of a software module and hardware in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of a software module and hardware in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For an example but not for a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method in any one of embodiments shown in FIG. 2 to FIG. 6.

According to the method provided in embodiments of this application, this application further provides a computer-readable medium. The computer-readable medium stores program code. When the program code is run on a computer, the computer is enabled to perform the method in any one of embodiments shown in FIG. 2 to FIG. 6.

According to the method provided in embodiments of this application, this application further provides a system. The system includes the foregoing one or more terminal devices and the foregoing one or more network devices.

A person of ordinary skill in the art may be aware that, in combination with the examples described in embodiments disclosed in this specification, units and algorithm steps may be implemented by electronic hardware or a combination of computer software and electronic hardware. Whether the functions are performed by a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The "a plurality of" in embodiments of this application means "two or more".

Descriptions such as first and second in embodiments of this application are merely used for indicating and distinguishing between described objects, do not show a sequence, do not indicate a special limitation on a quantity of described objects in embodiments of this application, and cannot constitute any limitation on embodiments of this application.

Mutual reference may be made to content in embodiments of this application. Unless otherwise specified or a logical conflict occurs, terms and/or descriptions in different embodiments are consistent and may be referenced by each other. Technical features in different embodiments may be combined to form a new embodiment based on an internal logical relationship.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A cell handover method, wherein the method is used to hand over a terminal from a second network element to a first network element, and the method comprises:
receiving a first random access request message, wherein the first random access request message comprises information indicating the second network element, and a first cell group managed by the first network element and a second cell group managed by the second network element belong to a dynamic cell set DCS;
sending a first connection request message to a core network element, wherein the first connection request message comprises first DCS indication information, and the first DCS indication information indicates the core network element to deactivate a connection to a network element to which a cell group that is in the DCS and that was accessed by the terminal belongs; and
receiving a first connection acknowledgment message from the core network element.

2. The method according to claim 1, wherein if the first network element establishes no connection to the core network element, the first connection request message is used to request to establish a connection to the core network element, the first connection acknowledgment message indicates that the first network element has established the connection to the core network element, and the first connection acknowledgment message comprises a next hop chaining counter NCC parameter and a next hop NH parameter that are used for handing over the terminal to the second network element.

3. The method according to claim 1, wherein if the first network element establishes a connection to the core network element and the connection is not activated, the first connection request message is used to request to activate the connection to the core network element, and the first connection acknowledgment message indicates that the connection between the first network element and the core network element is activated.

4. The method according to any one of claims 1 to 3, wherein the method further comprises:
receiving, from a third network element, a first indication message indicating to release context information of the terminal, wherein the third network element is a network element that the terminal accesses after being handed over from the first network element, and a third cell group managed by the third network element does not belong to the DCS; and
releasing the context information of the terminal based on the first indication message.

5. The method according to claim 4, wherein the method further comprises:
sending, to a network element to which a cell group other than the first cell group in the DCS belongs, a second indication message indicating to release the context information of the terminal.

6. The method according to claim 4, wherein a second indication message indicating to release the context information of the terminal is sent to a fourth network element, wherein a fourth cell group managed by the fourth network element belongs to the DCS, and the second indication message further indicates the fourth network element to send, to a network element to which a cell group other than the first cell group and the fourth cell group in the DCS belongs, a third indication message indicating to release the context information of the terminal.

7. A cell handover method, wherein the method is applied to a core network element, and the method comprises:
receiving a first connection request message from a first network element, wherein the first connection request message comprises first DCS indication information, and the first DCS indication information indicates the core network element to deactivate a connection to a network element to which a cell group that is in a DCS and that was accessed by a terminal belongs;
deactivating, based on the first DCS indication information, the connection to the network element to which the cell group that is in the DCS and that was accessed by the terminal belongs; and
sending a first connection acknowledgment message to the first network element.

8. The method according to claim 7, wherein if the first network element establishes no connection to the core network element, the first connection request message is used to request to establish a connection to the core network element, and the method further comprises:
establishing the connection to the first network element, wherein the first connection acknowledgment message indicates that the first network element has established the connection to the core network element, the first connection acknowledgment message comprises a next hop chaining counter NCC parameter and a next hop NH parameter that are used for handing over the terminal to a second network element, and the second network element is a source access network element for handing over the terminal to the first network element.

9. The method according to claim 7, wherein if the first network element establishes a connection to the core network element and the connection is not activated, the first connection request message is used to request to activate the connection to the core network element, and the method further comprises:
activating the connection to the first network element, wherein the first connection acknowledgment message indicates that the connection between the first network element and the core network element is activated.

10. A cell handover method, wherein the method is applied to a terminal, and the method comprises:
receiving DCS configuration information from a fifth network element, wherein the DCS configuration information is used by the terminal to determine a target cell, and a fifth cell group managed by the fifth network element belongs to a dynamic cell set DCS;
measuring signal quality of at least one first cell;
determining the target cell based on the signal quality of the at least one first cell and the DCS configuration information; and
sending a first random access request message to a network element to which the target cell belongs.

11. The method according to claim 10, wherein the DCS configuration information comprises a first threshold, and the determining the target cell based on the signal quality of the at least one first cell and the DCS configuration information comprises:
if signal quality of one of the at least one first cell exceeds the first threshold, determining, by the terminal, the first cell as the target cell; or
if signal quality of a plurality of first cells of the at least one first cell exceeds the first threshold, determining, by the terminal, a first cell with best signal quality in the plurality of first cells as the target cell.

12. The method according to claim 10 or 11, wherein the DCS comprises K cell groups managed by K network elements, the DCS configuration information further comprises a cell-radio network temporary identifier C-RNTI configured for the terminal by a network element other than the fifth network element in the K network elements, K is an integer greater than 1, and the C-RNTI is used by the terminal to access, when the target cell belongs to the DCS, the network element to which the target cell belongs; and
the DCS configuration information further comprises second DCS indication information, and the second DCS indication information indicates the terminal to determine the target cell.

13. A cell handover method, wherein the method is applied to a fifth network element, and the method comprises:
determining DCS configuration information; and
sending the DCS configuration information to a terminal, wherein the DCS configuration information is used by the terminal to determine a target cell, and a fifth cell group managed by the fifth network element belongs to a dynamic cell set DCS.

14. The method according to claim 13, wherein the DCS configuration information comprises a first threshold.

15. The method according to claim 13 or 14, wherein the DCS comprises K cell groups managed by K network elements, the DCS configuration information further comprises a C-RNTI configured for the terminal by a network element other than the fifth network element in the K network elements, K is an integer greater than 1, and the C-RNTI is used by the terminal to access, when the target cell belongs to the DCS, a network element to which the target cell belongs; and
the DCS configuration information further comprises second DCS indication information, and the second DCS indication information indicates the terminal to determine the target cell.

16. A communication apparatus, comprising a module configured to perform the method according to any one of claims 1 to 6, any one of claims 7 to 9, any one of claims 10 to 12, or any one of claims 13 to 15.

17. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 6, any one of claims 7 to 9, any one of claims 10 to 12, or any one of claims 13 to 15.

18. A computer storage medium, comprising computer instructions, wherein when the computer instructions are run on an electronic device, the electronic device is enabled to perform the method according to any one of claims 1 to 6, any one of claims 7 to 9, any one of claims 10 to 12, or any one of claims 13 to 15.

19. A computer program product, comprising computer instructions, wherein when the computer instructions are run on an electronic device, the electronic device is enabled to perform the method according to any one of claims 1 to 6, any one of claims 7 to 9, any one of claims 10 to 12, or any one of claims 13 to 15.

20. A communication system, comprising a first network element and a core network element, wherein the first network element is configured to perform the method according to any one of claims 1 to 6, and the core network element is configured to perform the method according to any one of claims 7 to 9.

21. The communication system according to claim 20, wherein the communication system further comprises a fifth network element, and the fifth network element is configured to perform the method according to any one of claims 13 to 15.

22. The communication system according to claim 20 or 21, wherein the communication system further comprises a terminal, and the terminal is configured to perform the method according to any one of claims 10 to 12.
